# EUROPÄISCHE PATENTANMELDUNG

(11) **EP 0 607 609 A2**
(43) Veröffentlichungstag der Anmeldung: **27.07.1994**
(21) Anmeldenummer: 93120898.7
(22) Anmeldetag: 24.12.1993
(51) Int. Cl.: B65D 81/32, B05C 17/005, B05C 17/01, B01F 13/00, B05D 5/10, F16B 11/00

(54) **Verfahren zum Mischen und Einspritzen eines Zweikomponentenklebers in eine durcheinen Eck- oder einen T-Verbinder mechanisch stabilisierte Rahmenecke**

(30) Priorität: 18.01.1993 DE 4301127
(71) Anmelder: SCHÜCO International KG, D-33609 Bielefeld (DE)
(72) Erfinder: Habicht, Siegfried, D-33818 Leopoldshöhe (DE)
(74) Vertreter: Loesenbeck, Karl-Otto, Dipl.-Ing.

(57) **Zusammenfassung**

2.1 Das Verfahren ist so gestaltet, daß ein offenes Mischen der Klebstoffkomponenten oder ein Umfüllen der Klebstoffkomponenten oder der gemischten Klebstoffkomponenten unter Raumluft entfällt.

2.2 Die Kartusche enthält vor dem Einführen in das Kartuschenrohr einer Spritzpistole die beiden Kleberkomponenten in getrennten Kammern (2,4), deren Trennnaht (3) durch wechselnde Druckbelastungen der Außenhülle ohne eine Beschädigung der Außenhülle aufgetrennt wird. Durch die Fortsetzung der wechselnden Druckbelastungen der Außenhülle werden die Kleberkomponenten durchmischt. Die Kartusche wird dann mit einer der Spritzdüse der Spritzpistole zugewandten Austragsöffnung versehen und in das Kartuschenrohr eingeführt. Das Einspritzen des Klebers in eine Rahmenecke erfolgt mittels der Spritzpistole.

2.3 Das Verfahren wird im Hochbau bei der Herstellung von Fenstern, Türen und Fassaden angewendet.

## Beschreibung

Die Erfindung bezieht sich auf ein Verfahren zum Mischen und Einspritzen eines Zweikomponentenklebers in eine durch einen Eck- oder einen T-Verbinder mechanisch stabilisierte Rahmenecke unter Verwendung einer ein Kartuschenrohr zur Aufnahme einer mit gemischten Kleberkomponenten gefüllten Kartusche aufweisenden Spritzpistole.

Es ist im Metallbau bekannt, Rahmenecken bzw. Sprossenstöße so herzustellen, daß in die Rahmenprofile ein zuvor gemischter Kleber mittels eines Spachtels in die jeweilige Hohlkammer eingebracht wird. Daraufhin werden die Eckverbinder bzw. Sprossenverbinder in den noch unausgehärteten Kleber in das Hohlprofil eingeschoben und es wird die Verbindung mechanisch durch Schrauben, Nägel oder Sicken gesichert und positioniert. Nach dem Aushärten des Klebers übernimmt dieser die Lastabtragung der eingebrachten Kräfte.

Bevorzugt werden Zweikomponentenkleber verwendet und die Komponenten zueinander dosiert und gemischt, wobei auch Dosiervorrichtungen eingesetzt werden können.

Der in einem offenen Gefäß gemischt vorliegende Kleber bildet durch die Atmosphäre sich verflüchtende, gasförmige Bestandteile eine Geruchsbelästigung, die in aller Regel durchaus toxische Wirkung haben kann.

Für diese Arbeitsplätze, an denen die Kleberkomponenten gemischt werden, werden dann Maßnahmen hinsichtlich der Belüftung bzw. der Absaugung erforderlich, um den Sicherheitsbestimmungen Rechnung zu tragen.

Auch eine Hautberührung mit dem Kleber muß vermieden werden.

Es ist ferner bekannt (Zeitschrift "Aluminium" 42. Jg, 1966/11, Seite 697), einen gemischten Zweikomponentenkleber in eine Kunststoffkartusche einzufüllen und diesen offen gemischten Kleber dann mittels einer Auftragspistole durch eine Bohrung im Rahmenprofil in eine Eckverbindung einzupressen.

Das Mischen des Klebers erfolgt hierbei in gleicher Weise wie bei der zuvor beschriebenen Verarbeitungsmethode. Hinzu kommt noch das Umfüllen des Klebers in eine Kartusche.

Der Erfindung liegt die Aufgabe zugrunde, ein Verfahren der eingangs genannten Art so zu gestalten, daß ein offenes Mischen der Klebstoffkomponenten oder ein Umfüllen der Klebstoffkomponenten oder der gemischten Klebstoffkomponenten unter Raumluft entfällt.

Diese Aufgabe wird erfindungsgemäß dadurch gelöst, daß die Kartusche vor dem Einführen in das Kartuschenrohr der Spritzpistole die beiden Kleberkomponenten in getrennten Kammern enthält und mit einer flexiblen, allseitig geschlossenen Außenhülle versehen ist, die Naht oder die Wand zwischen den Kammern durch wechselnde Druckbelastungen der Außenhülle ohne eine Beschädigung der Außenhülle aufgetrennt und durch eine Fortsetzung der wechselnden Druckbelastungen der Außenhülle die Kleberkomponenten durchmischt werden, die Kartusche mit einer der Spritzdüse der Spritzpistole zugewandten Austragöffnung versehen und in das Kartuschenrohr eingeführt und beim Einspritzen des Klebers in die Rahmenecke durch einen in Richtung der Spritzdüse bewegbaren Kolben druckbelastet wird.

Die von der Kartusche in getrennten Kammern aufgenommenen Kleberkomponenten und auch der durchmischte Kleber kommen bis zur Einführung in das Kartuschenrohr der Spritzpistole nicht mit der Raumluft in Berührung, so daß für die Arbeiter keine besonderen Sicherungsvorkehrungen zu treffen sind.

Weitere Merkmale der Erfindung ergeben sich aus den Unteransprüchen.

Das erfindungsgemäße Verfahren wird anhand der beigefügten Zeichnungen erläutert.

Es zeigen:
- Fig. 1: einen rechteckförmigen Folienbehälter im Grundriß, aus dem die Kartusche gebildet wird,

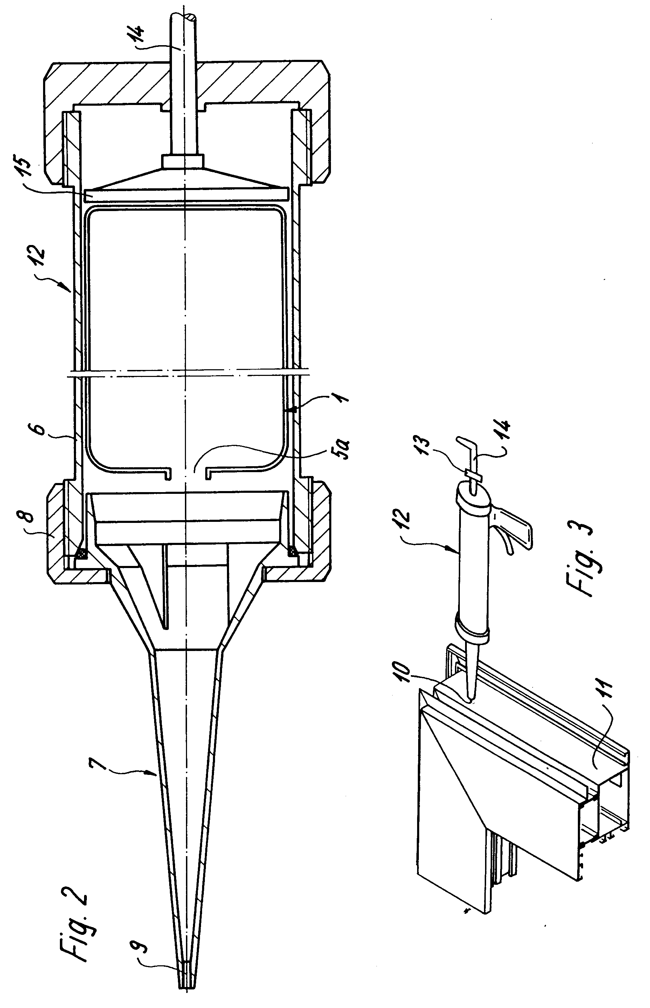

- Fig. 2: eine Spritzpistole teilweise im Längsschnitt, deren Kartuschenrohr mit einer Kartusche gefüllt ist,
- Fig. 3: in perspektivischer Darstellung eine Rahmenecke mit angesetzter Spritzpistole zum Zuführen eines Zweikomponentenklebers in die Rahmenecke und
- Fig. 4: weitere Ausführungsformen von Folienbehältern, deren zwei Kammern mit Komponenten eines Klebers gefüllt sind.

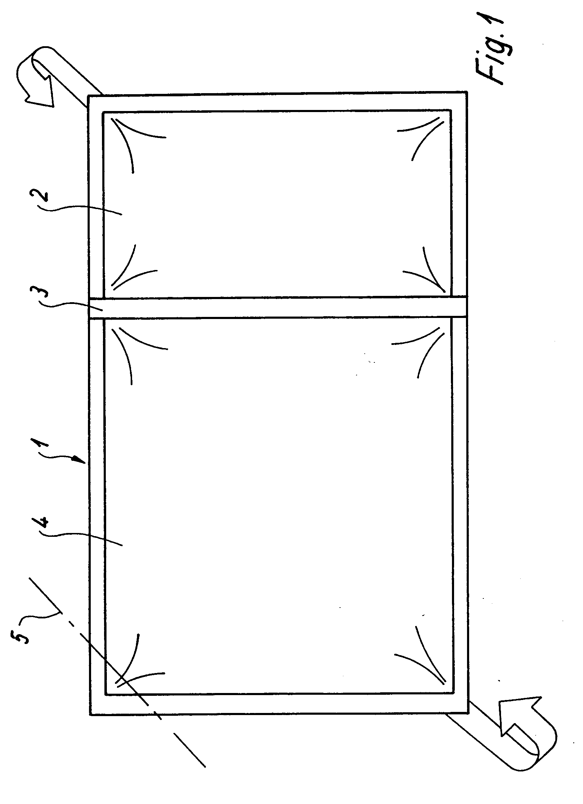

In der Fig. 1 ist ein Folienbehälter 1 aufgezeigt, der mit Kammern 2 und 4 versehen ist, die voneinander durch eine leicht lösbare Trennschweißnaht 3 getrennt sind. Die Kammern 2 und 4 sind mit Kleberkomponenten eines Zweikomponentenklebers gefüllt.

Die allseitig geschlossene Außenhülle des Folienbehälters 1, der im Grundriß rechteckförmig ist, wird durch eine Kunststoffolie gebildet, die je nach den Erfordernissen auch mit einer Aluminiumfolie kaschiert sein kann.

Die Trennschweißnaht 3 hat die Eigenschaft, daß sie unter Druckbelastungen der Kissen bildenden gefüllten Kammern 2 und 4 aufplatzt und ein Vermischen der Kleberkomponenten zuläßt. Durch ein Walken des Folienbehälters von Hand aus oder mittels einer Walkvorrichtung, die wechselnde Druckbelastungen des Folienbehälters erzeugt, findet die erforderliche Vermischung beider dosierter Komponenten statt.

Nach der Durchmischung der Kleberkomponenten wird der Folienbehälter, wie durch die diagonal angeordneten Pfeile angedeutet, zu einer Kartusche aufgerollt und an einer Ecke durch einen Schnitt längs der Linie 5 mit einer Austragöffnung für den Kleber versehen und in ein Kartuschenrohr 6 eingeführt und zwar in der Weise, daß die durch den Schnitt längs der Linie 5 geschaffene Austragöffnung 5a an der der Spritzdüse 7 der Spritzpistole zugewandten Seite liegt. Das Kartuschenrohr 6 wird dann von der Spritzdüse 7 verschlossen, die mittels einer überwurfverschraubung 8 am Kartuschenrohr festgelegt wird.

Die Spritzdüse 7 weist eine Spitze 9 auf, die leicht konisch verläuft und in eine Bohrung 10 eines Rahmenprofils 11 im Eckbereich zweier auf Gehrung geschnittener Rahmenprofile dichtend eingesteckt wird.

Die Spritzpistole 12 kann von Hand aus betätigt oder pneumatisch, hydraulisch oder elektromechanisch angetrieben werden.

Mittels der Spritzpistole 12 kann die erforderliche Klebermenge reproduzierbar in die Eck- oder T-Verbindung dosiert werden. Die Dosierung kann durch einen Anschlag 13 erfolgen, der an der Kolbenstange 14 umsteckbar befestigt ist. Durch diesen Anschlag wird der Weg des Kolbens 15, der auf die Kartusche wirkt, begrenzt.

Es ist auch möglich, die Klebermenge dadurch zu dosieren, daß unterschiedliche Kartuschengrößen verwendet werden, die in das Kartuschenrohr eingesetzt werden.

Das erfindungsgemäße Verfahren ist auch bei einer Eckverbindermaschine einsetzbar, bei der während des Zusammenstanzens der Eckverbindung eine automatisch angetriebene Spritzpistole zum Einsatz kommen kann.

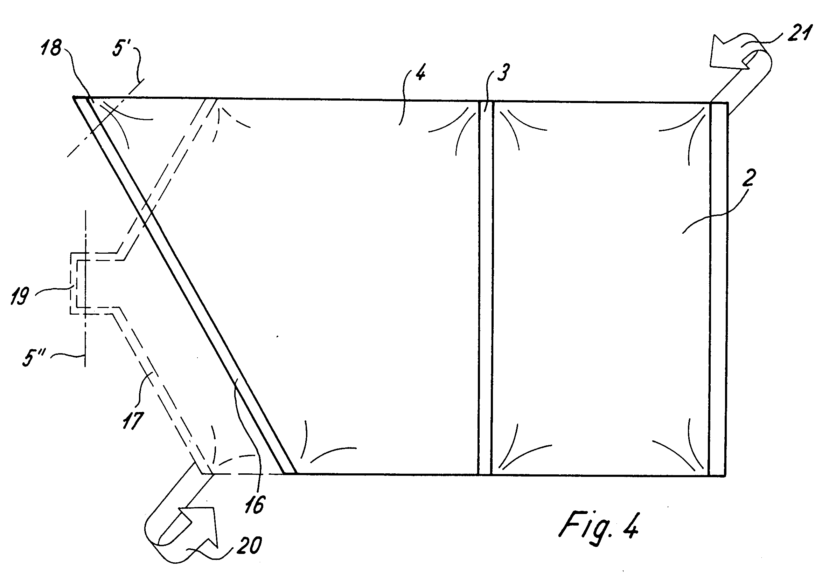

Der allseitig geschlossene Folienbehälter, aus dem die Kartusche gebildet wird, kann auch Raumformen aufweisen, wie sie in der Fig. 4 in ausgezogenen Linien und in gestrichelten Linien aufgezeigt sind.

Bei diesen beiden Raumformen nach der Fig. 4 ist der Folienbehälter an einer Endseite 16 bzw. 17 mit einer im Eckbereich liegenden Ausformung 18 oder im mittigen Bereich vorhandenen Ausformung 19 versehen, in deren Bereich nach der Durchmischung der Komponenten des Klebers die Austragöffnung durch einen Schnitt längs der Linie 5' oder 5'' eingeschnitten wird.

Zuvor wird die Kartusche aus dem Folienbehälter durch ein Aufrollen in Richtung der Pfeile 20,21 gebildet.

Die beschriebenen Ausformungen an einer Endseite zur Bildung der Austragöffnung werden insbesondere bei sehr langen, großvolumigen Folienbehältern vorgenommen.

Bei dem erfindungsgemäßen Verfahren wird die Kartusche vollständig bis auf geringe Kleberanhaftungen entleert, wobei diese Restanhaftungen aushärten und damit ein nicht mehr reaktionsfähiges Produkt darstellen, was einer normalen Deponie zugeführt werden kann. Die Kartusche ist nach dem Gebrauch auf ein Minimum an Volumen der ursprünglichen Abmessungen zusammengepreßt.

Reinigungsvorgänge an den Geräten sind nicht vorzunehmen, da sich die Verpackung in der verwendeten Spritzdüse sammelt, die innerhalb der Klebertopfzeit problemlos weiterverwendet werden kann.

### Bezugszeichen

- 1: Folienbehälter
- 2: Kammer
- 3: Trennschweißnaht
- 4: Kammer
- 5: Schnittlinie, 5a Austragöffnung
- 6: Kartuschenrohr
- 7: Spritzdüse
- 8: Überwurfverschraubung
- 9: Spitze
- 10: Bohrung
- 12: Spritzpistole
- 13: Anschlag
- 14: Kolbenstange
- 15: Kolben
- 16: Endseite
- 17: Endseite
- 18: Ausformung
- 19: Ausformung

## Patentansprüche

1. Verfahren zum Mischen und Einspritzen eines Zweikomponentenklebers in eine durch einen Eck- oder einen T-Verbinder mechanisch stabilisierte Rahmenecke unter Verwendung einer ein Kartuschenrohr zur Aufnahme einer mit gemischten Kleberkomponenten gefüllten Kartusche aufweisenden Spritzpistole, **dadurch gekennzeichnet,** daß die Kartusche vor dem Einführen in das Kartuschenrohr (6) die beiden Kleberkomponenten in getrennten Kammern (2,4) enthält und mit einer flexiblen, allseitig geschlossenen Außenhülle versehen ist, die Naht (3) oder die Wand zwischen den Kammern (2,4) durch wechselnde Druckbelastungen der Außenhülle ohne eine Beschädigung der Außenhülle aufgetrennt wird und durch eine Fortsetzung der wechselnden Druckbelastungen der Außenhülle die Kleberkomponenten durchmischt werden, die Kartusche mit einer der Spritzdüse (7) der Spritzpistole (12) zugewandten Austragsöffnung (5a) versehen und in das Kartuschenrohr (6) eingeführt und beim Einspritzen des Klebers in die Rahmenecke durch einen in Richtung der Spritzdüse (7) bewegbaren Kolben (15) druckbelastet wird.

2. Verfahren nach Anspruch 1, dadurch gekennzeichnet, daß die Kartusche aus einem rechteckförmigen, mittels einer leicht lösbaren Trennschweißnaht (3) in zwei Kammern (2,4) zur Aufnahme der Kleberkomponenten geteilten Folienbehälter (1) gebildet und der Folienbehälter nach dem Durchmischen der Kleberkomponenten zu der Kartusche gerollt und in einer Ecke geöffnet wird.

3. Verfahren nach Anspruch 1, dadurch gekennzeichnet, daß die Klebermenge für eine Rahmenecke durch die Wahl einer entsprechenden Kartuschengröße begrenzt wird.

4. Verfahren nach Anspruch 1, dadurch gekennzeichnet, daß die Dosierung der Klebermenge durch einen den Hub des Kolbens (15) begrenzenden Anschlag (13) vorgenommen wird.

5. Verfahren nach Anspruch 2, dadurch gekennzeichnet, daß der Folienbehälter an einer Endseite (16,17) eine mittige oder in einem Eckbereich liegende Ausformung aufweist, in deren Bereich nach der Durchmischung der Kleberkomponenten die Austragöffnung eingeschnitten wird.
